# EUROPEAN PATENT APPLICATION

(11) **EP 4 815 167 A1**
(43) Date of publication of application: **30.09.2026**
(21) Application number: 25902813.2
(22) Date of filing: 05.08.2025
(51) Int. Cl.: H01M 50/449, H01M 50/446, H01M 50/403

(54) **SEPARATOR, PREPARATION METHOD THEREFOR, AND USE THEREOF**

(30) Priority: 10.12.2024 CN 202411806051
(71) Applicant: Shenzhen Senior Technology Material Co., Ltd., Shenzhen, Guangdong 518106 (CN)
(72) Inventor: CHEN, Weiyan, Shenzhen, Guangdong 518106 (CN); TAN, Bin, Shenzhen, Guangdong 518106 (CN); LIN, Yulin, Shenzhen, Guangdong 518106 (CN); QIAN, Cheng, Shenzhen, Guangdong 518106 (CN); LI, Qiuyi, Shenzhen, Guangdong 518106 (CN); QIANG, Li, Shenzhen, Guangdong 518106 (CN); GU, Jinhui, Shenzhen, Guangdong 518106 (CN); LV, Linlin, Shenzhen, Guangdong 518106 (CN)
(74) Representative: Loyer & Abello
(86) International application number: PCT/CN2025/112605
(87) International publication number: WO 2026/123726

(57) **Abstract**

The present invention provides a separator, a preparation method for the same, and an application thereof. The separator includes a substrate and a coating layer disposed on at least one surface of the substrate, wherein the coating layer includes inorganic particles and polymer microspheres; a mass ratio of the inorganic particles to the polymer microspheres is 1:0.25 to 4; an inner layer and an outer layer of the coating layer each independently have inorganic particles and polymer microspheres distributed therein, the number of the inorganic particles in the inner layer of the coating layer is greater than that of the polymer microspheres; and the number of the inorganic particles in the outer layer of the coating layer is less than that of the polymer microspheres. In the present invention, the separator has high bonding force, excellent thermal stability, and good infiltration performance, and a battery including the separator has high safety performance.

## Description

### TECHNICAL FIELD

The present invention relates to the technical field of lithium-ion batteries, for example, a separator, a preparation method for the same, and an application thereof.

### BACKGROUND

A separator is an important component of a lithium-ion battery. Its main functions are to separate a positive electrode and a negative electrode of the battery to prevent short circuits caused by contact between the two electrodes, and further to allow electrolyte ions to pass through. Using a separator with superior performance is one of the effective ways to obtain a high-performance lithium-ion battery.

Common separators in lithium-ion batteries are polyolefin separators, such as polyethylene separators, polypropylene separators, or composite separators formed from polyethylene and polypropylene. However, the thermal stability of polyolefin separators is poor, and they are prone to large-area shrinkage or melting under high-temperature environments, which can seriously lead to thermal runaway or short circuits within the battery, thereby affecting the safety of the battery. Moreover, the infiltration effect of the electrolyte on the separator is poor, affecting the cycle performance of the battery. In addition, the bonding performance of polyolefin separators is relatively poor. Therefore, to obtain a high-performance separator, it is usually necessary to modify the separator, for example, by providing a polymer coating and/or a ceramic coating on a surface of a base film, to improve the mentioned properties of the separator.

However, the modified separators in the related art still cannot simultaneously provide good bonding force, thermal stability, infiltration performance, and safety performance.

Therefore, developing a separator that has high bonding force, excellent thermal stability, and good infiltration performance, and can also improve battery safety performance, is an urgent problem to be solved in the art.

### SUMMARY

The following is an overview of the subject matter described in detail herein. This summary is not intended to limit the protection scope of the claims.

The present invention provides a separator, a preparation method for the same, and an application thereof. The separator has high bonding force, excellent thermal stability, and good infiltration performance, and a battery including the separator has high safety performance.

In a first aspect, the present invention provides a separator, including a substrate and a coating layer disposed on at least one surface of the substrate, wherein the coating layer includes inorganic particles and polymer microspheres; a mass ratio of the inorganic particles to the polymer microspheres is 1:(0.25 to 4); an inner layer and an outer layer of the coating layer each independently have inorganic particles and polymer microspheres distributed therein, the number of the inorganic particles in the inner layer of the coating layer is greater than that of the polymer microspheres; and the number of the inorganic particles in the outer layer of the coating layer is less than that of the polymer microspheres.

In the present invention, the coating layer includes inorganic particles and polymer microspheres, and by controlling the mass ratio of the inorganic particles to the polymer microspheres within a specific range, controlling the number of the inorganic particles in the inner layer of the coating layer to be greater than that of the polymer microspheres, and controlling the number of the inorganic particles in the outer layer of the coating layer to be less than that of the polymer microspheres, the separator can simultaneously achieve excellent bonding performance and thermal stability, and also has good infiltration performance. In addition, since the number of the inorganic particles in the inner layer of the coating layer is greater than that of the polymer microspheres, and the number of the polymer microspheres in the outer layer of the coating layer is greater than that of the inorganic particles, when a short circuit occurs in the battery and a large amount of heat is released, the polymer microspheres melt to close pores of the separator, which is beneficial to improving the safety performance of the battery.

In the present invention, the mass ratio of the inorganic particles to the polymer microspheres is 1: (0.25 to 4), wherein specific values within the range of 0.25 to 4 may be, for example, 0.25, 0.3, 0.35, 0.4, 0.45, 0.5, 0.6, 0.7, 0.8, 0.9, 1, 1.2, 1.4, 1.6, 1.8, 2, 2.2, 2.4, 2.6, 2.8, 3, 3.2, 3.4, 3.6, 3.8, or 4.

In the present invention, if the content of the inorganic particles in the outer layer of the coating layer is too high, the bonding performance will be further reduced; if the content of the inorganic particles is too low, the thermal stability will be poor.

In the present invention, the inner layer of the coating layer refers to a side close to the substrate; the outer layer of the coating layer refers to a side far away from the substrate. A method for testing the number of the inorganic particles and the number of the polymer microspheres in the outer layer or the inner layer of the coating layer includes: freezing the separator with liquid nitrogen, cutting it to obtain a cross section, then analyzing the morphology of the cross section using a scanning electron microscope, and using Origin software to obtain a number content ratio of particles with different particle sizes (i.e., the inorganic particles and the polymer microspheres) in the inner layer or the outer layer.

In one embodiment, a percentage by number of the inorganic particles in the inner layer of the coating layer is 60% to 90%, for example, it may be 60%, 62%, 64%, 66%, 68%, 70%, 72%, 74%, 76%, 78%, 80%, 82%, 84%, 86%, 88%, or 90%, based on a total number of the inorganic particles and the polymer microspheres in the inner layer of the coating layer being 100%.

In one embodiment, a percentage by number of the polymer microspheres in the outer layer of the coating layer is 70% to 99%, for example, it may be 70%, 72%, 74%, 76%, 78%, 80%, 82%, 84%, 86%, 88%, 90%, 92%, 94%, 96%, or 98%, based on a total number of the inorganic particles and the polymer microspheres in the outer layer of the coating layer being 100%.

In the present invention, the number of the polymer microspheres in the outer layer of the coating layer being within the above range is beneficial to improving the bonding force of the separator.

In one embodiment, a ratio of the D50 particle size of the inorganic particles to the D50 particle size of the polymer microspheres is 0.15 to 0.8, for example, it may be 0.15, 0.16, 0.18, 0.2, 0.22, 0.24, 0.26, 0.28, 0.3, 0.32, 0.33, 0.34, 0.36, 0.38, 0.4, 0.42, 0.44, 0.46, 0.48, 0.5, 0.52, 0.54, 0.56, 0.58, 0.6, 0.62, 0.64, 0.66, 0.68, 0.7, 0.72, 0.74, 0.76, 0.78, or 0.8.

In the present invention, the ratio of the D50 particle size of the inorganic particles to the D50 particle size of the polymer microspheres being within the above range can further improve the bonding force of the separator. If the particle size of the inorganic particles is too large, the bonding force is low; and if the particle size of the inorganic particles is too large, it will lead to an increase in the content of the inorganic particles in the outer layer of the coating layer, which will further reduce the bonding force.

In one embodiment, the polymer microspheres include first polymer microspheres and second polymer microspheres, wherein a D50 particle size of the first polymer microspheres is greater than a D50 particle size of the second polymer microspheres.

In the present invention, when two kinds of polymer microspheres are selected, a ratio of the D50 particle size of the inorganic particles to the D50 particle size of any one of the polymer microspheres is within the range of 0.15 to 0.8.

In one embodiment, a mass ratio of the first polymer microspheres to the second polymer microspheres is not more than 0.6, for example, it may be 0.05, 0.06, 0.08, 0.1, 0.12, 0.15, 0.18, 0.2, 0.22, 0.25, 0.28, 0.3, 0.32, 0.35, 0.38, 0.4, 0.42, 0.45, 0.48, 0.5, 0.52, 0.55, 0.58, or 0.6; and optionally, the mass ratio is 0.2 to 0.5.

In the present invention, using two kinds of polymer microspheres with different D50 particle sizes and controlling the mass ratio of the two within a specific range can increase the proportion of the polymer microspheres in the outer layer of the coating layer, so that small-particle polymer microspheres are evenly distributed in gaps between large-particle polymer microspheres in the outer layer, thereby maximizing a contact area between the polymer microspheres in the separator and an electrode sheet, further improving the bonding force and improving the infiltration performance of the separator. Moreover, because the outer layer is covered with polymer microspheres, when a short circuit occurs in the battery and a large amount of heat is released, the polymer microspheres melt to close the pores of the separator, improving the safety performance of the battery.

In one embodiment, the D50 particle size of the inorganic particles is 0.05 µm to 1 µm, for example, it may be 0.05 µm, 0.06 µm, 0.08 µm, 0.1 µm, 0.2 µm, 0.3 µm, 0.4 µm, 0.5 µm, 0.6 µm, 0.8 µm, or 1 µm.

In one embodiment, the D50 particle size of the inorganic particles is 0.1 µm to 0.8 µm, and the inorganic particles include at least one selected from the group consisting of boehmite, alumina, calcium oxide, barium sulfate, silica, and silicon carbide.

In one embodiment, the D50 particle size of the polymer microspheres is 0.5 µm to 3 µm, for example, it may be 0.5 µm, 0.6 µm, 0.8 µm, 1 µm, 1.2 µm, 1.4 µm, 1.5 µm, 1.6 µm, 1.8 µm, 2 µm, 2.2 µm, 2.4 µm, 2.6 µm, 2.8 µm, or 3 µm.

In the present invention, the D50 particle size may be tested by a TopSizer particle size analyzer.

In one embodiment, a melting point (T) of the polymer microspheres is 105°C to 120°C, for example, it may be 105°C, 106°C, 108°C, 110°C, 112°C, 114°C, 116°C, 118°C, or 120°C.

In one embodiment, the polymer microspheres include at least one selected from the group consisting of polyethylene wax microspheres, modified polyethylene wax microspheres, polyvinylidene fluoride microspheres, and polymethacrylate microspheres.

In the present invention, the modified polyethylene wax microspheres refer to polyethylene wax microspheres having side chains grafted onto surfaces of molecular chains to increase lengths of the side chains of the molecular chains, such as grafting long-chain groups including butyl or octyl.

In one embodiment, the coating layer further includes a binder.

In one embodiment, a mass ratio of the binder to the inorganic particles is (0.1 to 0.5):1, wherein specific values within the range of 0.1 to 0.5 may be, for example, 0.1, 0.11, 0.12, 0.13, 0.14, 0.15, 0.16, 0.17, 0.18, 0.19, 0.20, 0.25, 0.30, 0.4, 0.45, or 0.5.

In one embodiment, a glass transition temperature (Tg) of the binder is -70°C to -4°C, for example, it may be -70°C, -65°C, -60°C, -55°C, -50°C, -45°C, -40°C, -35°C, -30°C, -25°C, -20°C, -15°C, -10°C, or -4°C.

In one embodiment, the binder includes an alkyl acrylate binder and a modification thereof, and/or an alkyl methacrylate binder and a modification thereof. In one embodiment, the alkyl acrylate includes at least one selected from the group consisting of ethyl acrylate, n-butyl acrylate, isobutyl acrylate, n-octyl acrylate, 2-hydroxyethyl acrylate, 2-hydroxypropyl acrylate, and 2-ethylhexyl acrylate; and the alkyl methacrylate includes hexyl methacrylate.

In the present invention, the alkyl acrylate binder and the alkyl methacrylate binder refer to alkyl acrylate polymers and alkyl methacrylate polymers, which may be homopolymers or copolymers. The term "and a modification thereof" refers to including the alkyl (meth)acrylate binder and/or a modification thereof. The modification refers to a graft modification of the alkyl (meth)acrylate binder, wherein side chains are grafted into its molecular structure to increase lengths of side chains of the molecular chain, such as grafting long-chain groups including butyl or octyl.

In the present invention, the alkyl acrylate includes at least one selected from the group consisting of ethyl acrylate, n-butyl acrylate, isobutyl acrylate, n-octyl acrylate, 2-hydroxyethyl acrylate, 2-hydroxypropyl acrylate, and 2-ethylhexyl acrylate; and the alkyl methacrylate includes hexyl methacrylate.

In the present invention, using polymer microspheres with a specific melting point and a binder with a specific glass transition temperature can further improve the bonding force of the separator.

In the present invention, the melting point and the glass transition temperature may be measured by differential scanning calorimetry.

In one embodiment, a thickness of the coating layer is not less than 0.7 µm, for example, it may be 0.7 µm, 0.8 µm, 0.9 µm, 1 µm, 1.2 µm, 1.4 µm, 1.6 µm, 1.8 µm, 2 µm, 2.2 µm, 2.4 µm, 2.6 µm, 2.8 µm, or 3 µm; and a thickness of the inner layer of the coating layer is not less than 0.2 µm, for example, it may be 0.2 µm, 0.4 µm, 0.6 µm, 0.8 µm, 1 µm, 1.2 µm, 1.4 µm, 1.6 µm, 1.8 µm, 2 µm, 2.2 µm, or 2.4 µm.

In the present invention, a thickness of the outer layer of the coating layer is the D50 particle size range (in µm) of the polymer microspheres, and a thickness of the inner layer is the thickness of the coating layer minus the thickness of the outer layer of the coating layer.

In the present invention, a thickness of the substrate is 3 µm to 16 µm, for example, it may be 3 µm, 4 µm, 5 µm, 6 µm, 8 µm, 10 µm, 12 µm, 14 µm, or 16 µm.

In one embodiment, the substrate includes at least one selected from the group consisting of a polypropylene substrate, a polyethylene substrate, and a polypropylene and polyethylene multilayer composite substrate.

In a second aspect, the present invention provides a preparation method for the separator according to the first aspect, the preparation method including: S1: providing a substrate; and S2: preparing a slurry for a coating layer, applying the obtained slurry onto at least one surface of the substrate, and drying to obtain the separator, wherein a process of the application further includes an oscillation step.

In the present invention, in the preparation method for the separator, by adding an oscillation step during the coating process, the inorganic particles can be deposited on an inner side of the coating, and the polymer microspheres are distributed in the outer layer of the coating layer.

In one embodiment, a preparation method for the slurry includes: uniformly mixing inorganic particles, polymer microspheres, and a solvent to obtain the slurry.

In one embodiment, the solvent includes at least one selected from the group consisting of water, acetone, ethanol, and N-methylpyrrolidone (NMP).

In one embodiment, a solid content of the slurry is 25% to 90%, such as 25%, 30%, 35%, 40%, 45%, 50%, 55%, 60%, 65%, 70%, 75%, 80%, 85%, or 90%.

In one embodiment, materials to be mixed further include a binder and/or an auxiliary agent.

In one embodiment, a mass percentage of the auxiliary agent in the slurry is 0.02% to 15%, for example, it may be 0.02%, 0.04%, 0.06%, 0.08%, 0.1%, 0.5%, 1%, 2%, 4%, 6%, 8%, 10%, 12%, or 14%.

In one embodiment, the auxiliary agent includes a wetting agent and/or a dispersant.

In one embodiment, the oscillation is performed by a coating machine.

In one embodiment, an oscillation frequency of the coating machine is 0.1 Hz to 2 Hz, for example, it may be 0.1 Hz, 0.2 Hz, 0.3 Hz, 0.4 Hz, 0.5 Hz, 0.6 Hz, 0.7 Hz, 0.8 Hz, 0.9 Hz, 1 Hz, 1.1 Hz, 1.2 Hz, 1.3 Hz, 1.4 Hz, 1.5 Hz, 1.6 Hz, 1.7 Hz, 1.8 Hz, 1.9 Hz, or 2 Hz.

In the present invention, by controlling the oscillation frequency of the coating machine, proportions of the inorganic particles and the polymer microspheres in the inner and outer layers of the coating layer are regulated.

In the present invention, the oscillation frequency of the coating machine can be obtained by adjusting a speed and a speed ratio of the coating machine.

In the present invention, the speed of the coating machine is 80 m/min to 120 m/min, for example, it may be 80 m/min, 82 m/min, 84 m/min, 86 m/min, 88 m/min, 90 m/min, 92 m/min, 94 m/min, 96 m/min, 98 m/min, 100 m/min, 102 m/min, 104 m/min, 106 m/min, 108 m/min, 110 m/min, 112 m/min, 114 m/min, 116 m/min, 118 m/min, or 120 m/min.

In the present invention, the speed ratio of the coating machine is 0.8 to 1.2, for example, it may be 0.8, 0.82, 0.84, 0.86, 0.88, 0.9, 0.92, 0.94, 0.96, 0.98, 1, 1.02, 1.04, 1.06, 1.08, 1.1, 1.12, 1.14, 1.16, 1.18, or 1.2.

In one embodiment, the drying temperature is 50°C to 80°C, for example, it may be 50°C, 55°C, 60°C, 65°C, 70°C, 75°C, or 80°C.

In a third aspect, the present invention provides a battery, the battery including the separator according to the first aspect or the separator prepared by the preparation method for the separator according to the second aspect.

The numerical ranges described in the present invention include not only the above-listed point values, but also any point values between the above numerical ranges that are not listed. Due to space limitations and for the sake of conciseness, the present invention does not exhaustively list the specific point values included in the ranges.

Compared with the related art, the beneficial effects of the present invention are:

In the separator provided by the present invention, the coating layer includes inorganic particles and polymer microspheres, and by controlling the mass ratio of the inorganic particles to the polymer microspheres within a specific range and controlling the number of the inorganic particles in the inner layer of the coating layer to be greater than that of the polymer microspheres, the separator can simultaneously achieve excellent bonding performance and thermal stability, and also has good infiltration performance and high battery safety performance.

Other aspects can be understood after reading and understanding the detailed description.

### DETAILED DESCRIPTION OF THE EMBODIMENTS

The technical solution of the present invention will be further described below through specific embodiments. It should be understood by those skilled in the art that the described embodiments are merely helpful for understanding the present invention and should not be construed as specific limitations on the present invention.

All materials used in the present invention can be obtained from commercial sources or prepared by conventional methods. Unless otherwise specified, the materials used in the present invention are as follows:

### Polymer microspheres

Polyethylene wax microspheres 1: melting point 105°C, D50 ≤ 0.53 µm, purchased from Guangdong Advanced Carbon Materials Co., Ltd.

Polyethylene wax microspheres 2: melting point 118°C, D50 ≤ 2 µm, purchased from Guangdong Advanced Carbon Materials Co., Ltd.

Polyethylene wax microspheres 3: melting point 100°C, D50 particle size 1 µm, custom-made.

Polyethylene wax microspheres 4: melting point 124°C, D50 particle size 1 µm, custom-made.

### Binder

Isobutyl acrylate binder, glass transition temperature -4°C, purchased from Macklin Chemical.

n-butyl methacrylate binder, glass transition temperature 20°C, purchased from Merck Life Sciences.

2-Ethylhexyl acrylate binder, glass transition temperature -70°C, purchased from Merck Life Sciences.

Boehmite with different particle sizes, purchased from Xinke Zhonglian New Materials Co., Ltd.

Wetting agent: SY-190 from Guangdong Fangding New Materials Co., Ltd.

Dispersant: 8823 from Shenzhen Yanyi New Materials Co., Ltd.

### Example 1

This example provides a separator, including a substrate (a polyethylene substrate with a thickness of 7 µm, from Shenzhen Senior Technology Material Co., Ltd.) and a coating layer (with a thickness of 1.8 µm) disposed on one surface of the substrate; the coating layer includes polyethylene wax microspheres 2 (T is 118°C, D50 particle size is 1 µm), boehmite particles (D50 particle size is 0.5 µm), and a 2-ethylhexyl acrylate binder 4 (Tg is -70°C); a mass ratio of the boehmite particles to the polyethylene wax microspheres is 1:1, and a ratio of the D50 particle sizes is 0.5; a mass ratio of the 2-ethylhexyl acrylate binder to the boehmite particles is 0.1:1.

This example provides a preparation method for a separator, which specifically includes the following steps:
According to the formula amounts, uniformly mixing the polyethylene wax microspheres, the boehmite particles, the 2-ethylhexyl acrylate binder, the infiltration agent, and the dispersant with a solvent to obtain a slurry with a solid content of 14.5%, wherein a mass percentage of the infiltration agent in the slurry is 0.15%, and a mass percentage of the dispersant is 1.5%; applying the slurry onto one surface of a substrate, wherein during the coating process, an oscillation frequency of the coating machine is made to be 1 Hz by controlling a speed and a speed ratio of the coating machine; and then drying at 60°C to obtain the separator.

### Examples 2 to 14 and Comparative Examples 1 to 4

Examples 2 to 14 and Comparative Examples 1 to 4 respectively provide a separator, which differs from Example 1 only in that the coating layer of the separator is different. The thickness of the coating layer, the mass ratio of the polymer microspheres to the inorganic particles in the coating layer, the mass ratio of the inorganic particles to the binder, the ratio of the D50 particle size of the inorganic particles to the D50 particle size of the polymer microspheres, the composition of the polymer microspheres, and the mass percentage contents of the inorganic particles and the polymer microspheres in the outer and inner layers of the coating layer are shown in Tables 1 to 4. Here, "/" indicates that the component is absent in the formula. When two polymer microspheres with different D50 particle sizes are included, the total amount of the polymer microspheres remains unchanged. In the preparation method for the separator, the only difference is that the oscillation frequency of the coating machine is different, and the specific parameters are shown in Tables 1 to 4; and "/" indicates that this step is not performed. Other unspecified parameters are the same as those in Example 1.

**Table 1**

| | | | | | Example 1 | Example 2 | Example 3 | Example 4 | Example 5 |
|---|---|---|---|---|---|---|---|---|---|
| Coating layer | Thickness (µm) | | | | 1.8 | 2.2 | 2.4 | 1.8 | 1.8 |
| | Inorganic particles | Boehmite | D50 (µm) | 0.5 | 1 | / | / | 1 | 1 |
| | | | | 0.4 | / | 1 | / | / | / |
| | | | | 0.2 | / | / | / | / | / |
| | | | | 0.8 | / | / | 1 | / | / |
| | Polymer microspheres | Polyethylene wax microspheres | T (°C)/D 50 (µm) | 118/1 | 1 | / | / | 0.25 | 4 |
| | | | | 105/0.5 | / | 0.8 | / | / | / |
| | | | | 118/1.2 | / | / | 2 | / | / |
| | | | | 100/1 | / | / | / | / | / |
| | | | | 124/1 | / | / | / | / | / |
| | Ratio of the D50 particle size of the inorganic particles to the D50 particle size of the polymer microspheres | | | | 0.5 | 0.8 | 0.67 | 0.5 | 0.5 |
| | Binder | Alkyl (meth)acry late binder | Tg (°C) | -4 | | 0.25 | / | / | / |
| | | | | 20 | / | / | / | / | / |
| | | | | -70 | 0.1 | / | 0.5 | 0.1 | 0.1 |
| Inner layer of coating layer | Percentage by number of inorganic particles (%) | | | | 90 | 84 | 86 | 98 | 70 |
| | Percentage by number of polymer microspheres (%) | | | | 10 | 16 | 14 | 2 | 30 |
| Outer layer of coating layer | Percentage by number of inorganic particles (%) | | | | 5 | 15 | 9 | 30 | 2 |
| | Percentage by number of polymer microspheres (%) | | | | 95 | 85 | 91 | 70 | 98 |
| Oscillation frequency (Hz) | | | | | 1 | 0.8 | 1.2 | 1 | 1 |

**Table 2**

| | | | | | Example 6 | Example 7 | Example 8 | Example 9 |
|---|---|---|---|---|---|---|---|---|
| Coating layer | Thickness (µm) | | | | 1.8 | 1.8 | 1.8 | 1.8 |
| | Inorganic particles | Boehmite | D50 (µm) | 0.5 | 1 | 1 | 1 | 1 |
| | | | | 0.4 | / | / | / | / |
| | | | | 0.2 | / | / | / | / |
| | | | | 0.8 | / | / | / | / |
| | Polymer microspheres | Polyethylene wax microspheres | T (°C)/D50 (µm) | 118/1 | 0.1 | 0.2 | 0.35 | 0.45 |
| | | | | 105/0.5 | / | / | / | / |
| | | | | 105/0.7 | 0.9 | 0.8 | 0.65 | 0.55 |
| | | | | 118/1.2 | / | / | / | / |
| | | | | 100/1 | / | / | / | / |
| | | | | 124/1 | / | / | / | / |
| | Ratio of the D50 particle size of the inorganic particles to the D50 particle size of the polymer microspheres | | | | 0.5 and 0.71 | 0.5 and 0.71 | 0.5 and 0.71 | 0.5 and 0.71 |
| | Binder | Alkyl (meth)acryl ate binder | Tg (°C) | -4 | / | / | / | / |
| | | | | 20 | / | / | / | / |
| | | | | -70 | 0.1 | 0.1 | 0.1 | 0.1 |
| Inner layer of coating layer | Percentage by number of inorganic particles (%) | | | | 90 | 90 | 90 | 90 |
| | Percentage by number of polymer microspheres (%) | | | | 10 | 10 | 10 | 10 |
| Outer layer of coating layer | Percentage by number of inorganic particles (%) | | | | 4.5 | 4 | 3.5 | 2 |
| | Percentage by number of polymer microspheres (%) | | | | 95.5 | 96 | 96.5 | 98 |
| Oscillation frequency (Hz) | | | | | 1 | 1 | 1 | 1 |

**Table 3**

| | | | | | Example 10 | Example 11 | Example 12 |
|---|---|---|---|---|---|---|---|
| Coating layer | Thickness (µm) | | | | 1.8 | 1.8 | 1.8 |
| | Inorganic particles | Boehmite | D50 (µm) | 0.5 | / | 1 | 1 |
| | | | | 0.4 | / | / | / |
| | | | | 0.2 | 1 | / | / |
| | | | | 0.8 | / | / | / |
| | Polymer microspheres | Polyethylene wax microspheres | T (°C)/D50 (µm) | 118/1 | / | / | / |
| | | | | 105/0.5 | / | / | / |
| | | | | 118/2 | 1 | / | / |
| | | | | 100/1 | / | 1 | / |
| | | | | 124/1 | / | / | 1 |
| | Ratio of the D50 particle size of the inorganic particles to the D50 particle size of the polymer microspheres | | | | 0.1 | 0.5 | 0.5 |
| | Binder | Alkyl (meth)acrylate binder | Tg (°C) | -4 | / | / | / |
| | | | | 20 | / | 0.1 | / |
| | | | | -70 | 0.1 | / | / |
| | | Polyvinylidene fluoride | Tg (°C) | -70 | / | / | 0.1 |
| Inner layer of coating layer | Percentage by number of inorganic particles (%) | | | | 59 | 90 | 90 |
| | Percentage by number of polymer microspheres (%) | | | | 41 | 10 | 10 |
| Outer layer of coating layer | Percentage by number of inorganic particles (%) | | | | 30 | 5 | 5 |
| | Percentage by number of polymer microspheres (%) | | | | 70 | 95 | 95 |
| Oscillation frequency (Hz) | | | | | 1 | 1 | 1 |

**Table 4**

| | | | | | Example 13 | Example 14 | Comparative Example 1 | ComparativeExample 2 | ComparativeExample 3 | ComparativeExample 4 |
|---|---|---|---|---|---|---|---|---|---|---|
| Coating layer | Thickness (µm) | | | | 1.8 | 1.8 | 1.8 | 1.8 | 1.8 | 1.8 |
| | Inorganic particles | Boehmite | D50 (µm) | 0.5 | 1 | 1 | 1 | 1 | 1 | / |
| | | | | 0.4 | / | / | / | / | / | / |
| | | | | 0.2 | / | / | / | / | / | / |
| | | | | 0.8 | / | / | / | / | / | 1 |
| | Polymer microspheres | Polyethylene wax microspheres | T (°C)/D50 (µm) | 118/1 | 1 | 1 | 0.2 | 5 | 1 | / |
| | | | | 105/0.5 | / | / | / | / | / | 1 |
| | | | | 118/2 | / | / | / | / | / | / |
| | | | | 100/1 | / | / | / | / | / | / |
| | | | | 124/1 | / | / | / | / | / | / |
| | Ratio of the D50 particle size of the inorganic particles to the D50 particle size of the polymer microspheres | | | | 0.5 | 0.5 | 0.5 | 0.5 | 0.5 | 1.6 |
| | Binder | Alkyl (meth) acrylate binder | Tg (°C) | -4 | / | / | / | / | / | / |
| | | | | 20 | / | / | / | / | / | / |
| | | | | -70 | 0.1 | 0.1 | 0.1 | 0.1 | 0.1 | 0.1 |
| Inner layer of coating layer | Percentage by number of inorganic particles (%) | | | | 55 | 83 | 97 | 65 | 58 | 45 |
| | Percentage by number of polymer microspheres (%) | | | | 45 | 17 | 3 | 35 | 42 | 55 |
| Outer layer of coating layer | Percentage by number of inorganic particles (%) | | | | 52 | 16 | 29 | 1.5 | 59 | 55 |
| | Percentage by number of polymer microspheres (%) | | | | 48 | 84 | 79 | 98.5 | 41 | 45 |
| Oscillation frequency (Hz) | | | | | 0.08 | 2.5 | 1 | 1 | / | 1 |

### Performance Test

(1) Bonding force: The separators provided in Examples 1 to 14 and Comparative Examples 1 to 4 were cut to the same size as a positive electrode sheet and a negative electrode sheet, then the positive electrode sheet, the separator, and the negative electrode sheet were bonded together, cold pressed at 60°C and 6.5 MPa for 60 seconds, and stretched with a tensile machine at a speed of 200 mm/min to test the bonding force between the separator and the negative electrode sheet.
(2) Thermal stability: The separators provided in Examples 1 to 14 and Comparative Examples 1 to 4 were cut to a size of 160 mm × 130 mm, a 100 mm × 100 mm square was drawn in a center of each separator, 5 sheets of paper were placed above and below the separator respectively, and then the separator was placed in an oven at 130°C for 1 hour, after which a shrinkage rate in an MD direction of the separator was tested.
(3) Air permeability increment: The air permeabilities of the separators and the substrates provided in Examples 1 to 14 and Comparative Examples 1 to 4 were tested using an air permeability tester. The air permeability increment was obtained by subtracting the air permeability of the substrate from the air permeability of the separator.
(4) Infiltration performance : The separator was cut into a 10 mm × 10 mm square, then placed on a glass sheet and tightly adhered with tape to keep a membrane surface flat. 2 microliters of propylene carbonate was taken with a syringe and dropped onto the separator sample. An MD droplet diameter of the droplet was measured at 0 min and 5 min, and a width of a diffusion layer was calculated. The width of the diffusion layer is defined as the MD droplet diameter at 5 min minus the MD droplet diameter at 0 min.

The specific test results are shown in Table 5:

**Table 5**

| | Bonding force (N/m) | Thermal shrinkage (%) | Air permeability increment (s) | Diffusion layer width (mm) |
|---|---|---|---|---|
| Example 1 | 15 | 0.3 | 8 | 3 |
| Example 2 | 10.5 | 0.4 | 7.5 | 3.0 |
| Example 3 | 11 | 0.35 | 7.6 | 3 |
| Example 4 | 6.5 | 0.25 | 10 | 2.8 |
| Example 5 | 16.5 | 1.5 | 7 | 2.9 |
| Example 6 | 17 | 0.28 | 8 | 3.2 |
| Example 7 | 18 | 0.35 | 7.8 | 3.3 |
| Example 8 | 20 | 0.2 | 7.6 | 3.4 |
| Example 9 | 16.5 | 0.35 | 7.5 | 3.1 |
| Example 10 | 11.2 | 0.25 | 15 | 2.9 |
| Example 11 | 6 | 0.42 | 18 | 2.9 |
| Example 12 | 5.8 | 0.4 | 9 | 2.8 |
| Example 13 | 7.8 | 0.35 | 7 | 3 |
| Example 14 | 10.3 | 0.4 | 7.2 | 3.02 |
| Comparative Example 1 | 3 | 0.2 | 12.5 | 3 |
| Comparative Example 2 | 17 | 3.5 | 8 | 2.56 |
| Comparative Example 3 | 7 | 0.45 | 7.1 | 2.8 |
| Comparative Example 4 | 11 | 0.8 | 12 | 2.9 |

As can be seen from Table 5, in the separator provided by the present invention, the coating layer includes inorganic particles and polymer microspheres, and by controlling the mass ratio of the inorganic particles to the polymer microspheres within a specific range, controlling the number of the inorganic particles in the inner layer of the coating layer to be greater than that of the polymer microspheres, and controlling the number of the inorganic particles in the outer layer of the coating layer to be less than that of the polymer microspheres, the separator can simultaneously achieve excellent bonding performance and thermal stability, and also has good infiltration performance . The bonding force between the separator and the negative electrode sheet is not less than 6 N/m, and can even reach 15 N/m or above. The thermal shrinkage is not more than 1.5%, and can even be as low as 0.4% or below. The width of the diffusion layer is not less than 2.8 mm.

As can be seen from Comparative Examples 1 to 4, when the mass ratio of the inorganic particles to the polymer microspheres is not within the specific range, or the numbers of the inorganic particles and the polymer microspheres in the inner and outer layers of the coating layer do not meet the specific quantitative content relationship, the bonding performance, thermal stability, air permeability, or infiltration performance of the separator deteriorates.

The specific embodiments described above further illustrate the objectives, technical solutions, and beneficial effects of the present invention in detail. It should be understood that the above descriptions are only specific embodiments of the present invention and are not intended to limit the present invention. Any modifications, equivalent substitutions, improvements, etc. made within the spirit and principle of the present invention shall fall within the protection scope of the present invention.

## Claims

1. A separator, **characterized by** comprising a substrate and a coating layer disposed on at least one surface of the substrate, wherein the coating layer comprises inorganic particles and polymer microspheres;
a mass ratio of the inorganic particles to the polymer microspheres is 1:(0.25 to 4); and
an inner layer and an outer layer of the coating layer each independently have inorganic particles and polymer microspheres distributed therein, the number of the inorganic particles in the inner layer of the coating layer is greater than that of the polymer microspheres; and the number of the inorganic particles in the outer layer of the coating layer is less than that of the polymer microspheres.

2. The separator according to claim 1, wherein a percentage by number of the inorganic particles in the inner layer of the coating layer is 60% to 90%, based on a total number of the inorganic particles and the polymer microspheres in the inner layer of the coating layer being 100%.

3. The separator according to claim 1 or 2, wherein a percentage by number of the polymer microspheres in the outer layer of the coating layer is 70% to 99%, based on a total number of the inorganic particles and the polymer microspheres in the outer layer of the coating layer being 100%.

4. The separator according to any one of claims 1 to 3, wherein a ratio of a D50 particle size of the inorganic particles to a D50 particle size of the polymer microspheres is 0.15 to 0.8.

5. The separator according to any one of claims 1 to 4, wherein the polymer microspheres comprise first polymer microspheres and second polymer microspheres, and a D50 particle size of the first polymer microspheres is greater than a D50 particle size of the second polymer microspheres; and a mass ratio of the first polymer microspheres to the second polymer microspheres is no more than 0.6, and optionally, the mass ratio is 0.2 to 0.5.

6. The separator according to any one of claims 1 to 5, wherein a D50 particle size of the inorganic particles is 0.05 µm to 1 µm.

7. The separator according to claim 6, wherein the D50 particle size of the inorganic particles is 0.1 µm to 0.8 µm, and the inorganic particles comprise at least one selected from the group consisting of boehmite, alumina, calcium oxide, barium sulfate, silica, and silicon carbide.

8. The separator according to any one of claims 1 to 7, wherein a D50 particle size of the polymer microspheres is 0.5 µm to 3 µm;
optionally, a melting point of the polymer microspheres is 105°C to 120°C; and
optionally, the polymer microspheres comprise at least one selected from the group consisting of polyethylene wax microspheres, modified polyethylene wax microspheres, polyvinylidene fluoride microspheres, and polymethacrylate microspheres.

9. The separator according to any one of claims 1 to 8, wherein the coating layer further comprises a binder;
optionally, a mass ratio of the binder to the inorganic particles is (0.1 to 0.5):1;
optionally, a glass transition temperature of the binder is -70°C to -4°C;
optionally, the binder comprises an alkyl acrylate binder and a modification thereof, and/or an alkyl methacrylate binder and a modification thereof; and
optionally, the alkyl acrylate comprises at least one selected from the group consisting of ethyl acrylate, n-butyl acrylate, isobutyl acrylate, n-octyl acrylate, 2-hydroxyethyl acrylate, 2-hydroxypropyl acrylate, and 2-ethylhexyl acrylate; and the alkyl methacrylate comprises hexyl methacrylate.

10. The separator according to any one of claims 1 to 9, wherein a thickness of the coating layer is no less than 0.7 µm, and a thickness of the inner layer of the coating layer is no less than 0.2 µm.

11. A preparation method for the separator according to any one of claims 1 to 10, **characterized by** comprising:
S1: providing a substrate; and
S2: preparing a slurry for the coating layer, applying the obtained slurry onto at least one surface of the substrate, and drying to obtain the separator, wherein a process of the application further comprises an oscillation step.

12. The preparation method according to claim 11, wherein a preparation method for the slurry comprises: uniformly mixing inorganic particles, polymer microspheres, and a solvent to obtain the slurry;
optionally, the solvent comprises at least one selected from the group consisting of water, acetone, ethanol, and N-methylpyrrolidone; and
optionally, a solid content of the slurry is 25% to 90%.

13. The preparation method according to claim 12, wherein the mixture further comprises a binder and/or an auxiliary agent;
a mass percentage of the auxiliary agent in the slurry is 0.02% to 15%; and
the auxiliary agent comprises a wetting agent and/or a dispersant.

14. The preparation method according to any one of claims 11 to 13, wherein the oscillation is performed by a coating machine;
optionally, an oscillation frequency of the coating machine is 0.1 Hz to 2 Hz; and
optionally, a drying temperature is 50°C to 80°C.

15. A battery, **characterized by** comprising the separator according to any one of claims 1 to 10, or the separator prepared by the preparation method according to any one of claims 11 to 14.
